# EUROPÄISCHE PATENTANMELDUNG

(11) **EP 2 584 192 A1**
(43) Veröffentlichungstag der Anmeldung: **24.04.2013**
(21) Anmeldenummer: 11185789.2
(22) Anmeldetag: 19.10.2011
(51) Int. Cl.: F03D 7/02

(54) **Pitchverstelleinrichtung**

(71) Anmelder: Siemens Aktiengesellschaft, 80333 München (DE)
(72) Erfinder: Aydan, Zeki, 34738 Erenköy/Istanbul (TR); Bizel, Can Tolga, 34797 Cekmeköy/Istanbul (TR); Geier, Ingo, 90556 Cadolznurg (DE); Oberndorfer, Klaus, 91056 Erlangen (DE)

(57) **Zusammenfassung**

Eine Pitchverstelleinrichtung (101,102,103,104) für eine Windkraftanlage weist eine drehzahlveränderbare elektrische Maschine (2,3,4,5), eine Konstantpumpe (7,8,9,10) und einen Kolben (11,12,13) auf. Die Pitchverstelleinrichtung (101, 102,103,104) kann in die Nabe (54) der Windkraftanlage (50) integriert sein.

## Beschreibung

Die vorliegende Erfindung betrifft eine Pitchverstelleinrichtung. Pitchverstelleinrichtungen werden bei Windkraftanlagen zur Drehverstellung der Rotorblätter der Windkraftanlage eingesetzt. Windkraftanlagen können ein Rotorblatt oder auch mehrere Rotorblätter aufweisen. Eine gängige Anzahl sind drei Rotorblätter. Auch die Gondel einer Windkraftanlage kann in ihrer Position gedreht werden.

Bei Windkraftanlagen werden z.B. in Abhängigkeit von der Windgeschwindigkeit die Blattwinkel der Rotorblätter verstellt (Pitchverstellung). In Notsituation, wie z.B. dem Ausfall des Stromnetzes, ist zudem eine Verstellung der Blattwinkel auf eine sichere Endlage zu gewährleisten. Darüber hinaus können weitere Aufgaben, wie etwa das Ausrichten des gesamten Turms in den Wind (Azimutverstellung), sowie das Bremsen der Rotorbewegung (Rotorbremse) bzw. Turmbewegung (Azimutbremse) gewährleistet werden. Unter der Pitchverstelleinrichtung wird zur Vereinfachung eine Einrichtung verstanden, die sowohl der Pitchverstellung der Rotorblätter als auch der Azimutverstellung dient.

Azimut- und Rotorblattverstellung können rein elektrisch erfolgen. Dies geschieht z.B. durch Eingriff eines elektrisch angetriebenen Ritzels in einen Zahnkranz am Fuß einer Gondel bzw. des einzelnen Rotorblattes.

Daneben gibt es auch hydraulische Systeme zur Pitch- und Azimutverstellung sowie für Rotor- und Azimutbremsen. Die Pitchverstellung erfolgt dabei z.B. über hydraulische Linearachsen, an denen direkt die zur Regelung notwendigen Ventile angebracht sind. Der erforderliche Hydraulikdruck wird in der Gondel durch eine regelbare Hydraulikpumpe erzeugt und über eine Drehdurchführung zur Nabe geleitet. Die regelbare Hydraulikpumpe wird mittels einer elektrischen Maschine angetrieben. Dieses Verfahren benötigt zum einen ein relativ gro-βes Tankvolumen für das Hydrauliköl und verschwendet zum anderen viel Energie an den Steuerkanten der Ventile. Ein erheblicher Energieverlust ergibt sich auch durch die regelbare Hydraulikpumpe.

Eine Aufgabe der Erfindung ist es eine effizientere Pitchverstelleinrichtung auszuführen.

Eine Lösung der Aufgabe wird bei einer Pitchverstelleinrichtung erreicht, welche eine drehzahlveränderbare elektrische Maschine, eine Konstantpumpe und einen Kolben aufweist. Weitere Lösungen ergeben sich aus den Vorrichtungen gemäß der Ansprüchen 1 bis 8.

Die drehzahlveränderbare Maschine treibt die Konstantpumpe an, mit welcher über Hydraulikflüssigkeit Kolben zur Pitchverstellung antreibbar sind. Die elektrische Maschine ist beispielsweise eine elektrische Synchronmaschine oder eine elektrische Asynchronmaschine. Die Konstantpumpe ist keine geregelte Pumpe, so dass sich Verluste die beim Einsatz geregelter Hydraulikpumpen entstehen vermeiden lassen. Damit ergibt sich in einfacher Weise eine Verringerung des Energieverbrauchs der Hydraulikanlage zur Pitchverstellung. Erreicht wird dies durch den Austausch der üblicherweise vorhanden mit konstanter Drehzahl laufenden Verstellpumpe durch mindestens eine mit variabler Drehzahl laufende Pumpe (typischerweise eine Pumpe mit festem Fördervolumen). Diese mit variabler Drehzahl laufende Pumpe, was durch die variable Drehzahl der angekoppelten elektrischen Maschine bedingt ist, wird als Konstantpumpe bezeichnet. Dies ergibt sich daraus, dass das Fördervolumen von der Drehzahl der angekoppelten elektrischen Maschine abhängt.

Eine Energieersparung ergibt sich beispielsweise in Zyklen mit geringer Verstelltätigkeit durch die dann mögliche Absenkung der Drehzahl und die damit wesentlich geringe Leistungsaufnahme des elektrischen Motors, bzw. der elektrischen Motoren. Für die Pitchverstellung können weiterhin Ventile eingesetzt werden. Die drehzahl variable Pumpe kann zentral in der Gondel der Windkraftanlage angeordnet sein.

Durch den Einsatz einer regelbaren elektrischen Maschine kann der hydraulische Volumenstrom durch Regelungseinrichtungen der elektrischen Maschine beeinflusst werden.

In einer Ausführungsform der Pitchverstelleinrichtung ist die Konstantpumpe direkt mit dem Kolben gekoppelt. Dabei kann jeweils einem Kolben jeweils eine Konstantpumpe zugeordnet sein.

Ist die Konstantpumpe direkt mit dem Kolben verbunden, so ist kein Ventil mehr dazwischen geschaltet. Hieraus ergibt sich dann eben ein noch größeres Einsparpotential durch Pumpenanordnungen, die auf die Verwendung von Verstellventilen komplett verzichtet werden kann. Solche Anordnungen können z.B. Energieverluste, die sich an der Steuerkante der Regelventile mit typischen 15 bis 20 Bar Druckabfall ergeben, vermeiden helfen.

Ein mögliches Verfahren stellt die Anordnung mit zwei Pumpen je Linearachse dar (Eine Motor/Pumpenkombination auf der Kolbenseite und eine auf der Ringseite). Zusätzlich ist für das Notrückzugskonzept z.B. entweder eine Kondensatorpufferung für die Antriebe oder aber ein Hydraulikdruckspeicher vorgesehen.

In einer weiteren Ausführungsform ist einem Kolben jeweils eine elektrische Maschine zugeordnet ist. Dabei kann in dieser Ausführung für jeden Kolben ein Druckspeicher vorgesehen sein. Der Anschluss des Kolbens an das Hydrauliksystem kann dabei so erfolgen, dass jeder Kolben an zwei Speicher angeschlossen ist.

Durch den Verzicht auf Ventile kann die Pitchverstelleinrichtung kompakter gebaut werden. So ist diese dann in die Nabe der Windkraftanlage integrierbar. Somit kann auch auf eine Drehdurchführung für die Hydraulik verzichtet werden.

Die für eine Notverstellung erforderliche Energie kann über Kondensatoren gewährleistet werden, die einen Zwischenkreis eines Stromrichters für die elektrischen Maschinen stützen.

Eine Notverstellung kann aber auch durch Druckspeicher gewährleistet oder zumindest unterstützt werden.

Die dargestellten Variationen einer verbesserten Pitchverstelleinrichtung ermöglichen nicht nur einen geringeren Energiebedarf, sonder auch ein verringertes Ölvolumen durch einen verbrauchsgeregelten Ölumlauf.

Die vorliegende Erfindung wird anhand der beigefügten Zeichnungen beispielhaft näher erläutert. Dabei zeigt:
- FIG 1: eine erste Pitchverstelleinrichtung 100 nach dem Stand der Technik;
- FIG 2: eine erste erfindungsgemäße Pitchverstelleinrichtung 102;
- FIG 3: eine zweite erfindungsgemäße Pitchverstelleinrichtung 103; und
- FIG 4: eine Windkraftanlage 50.

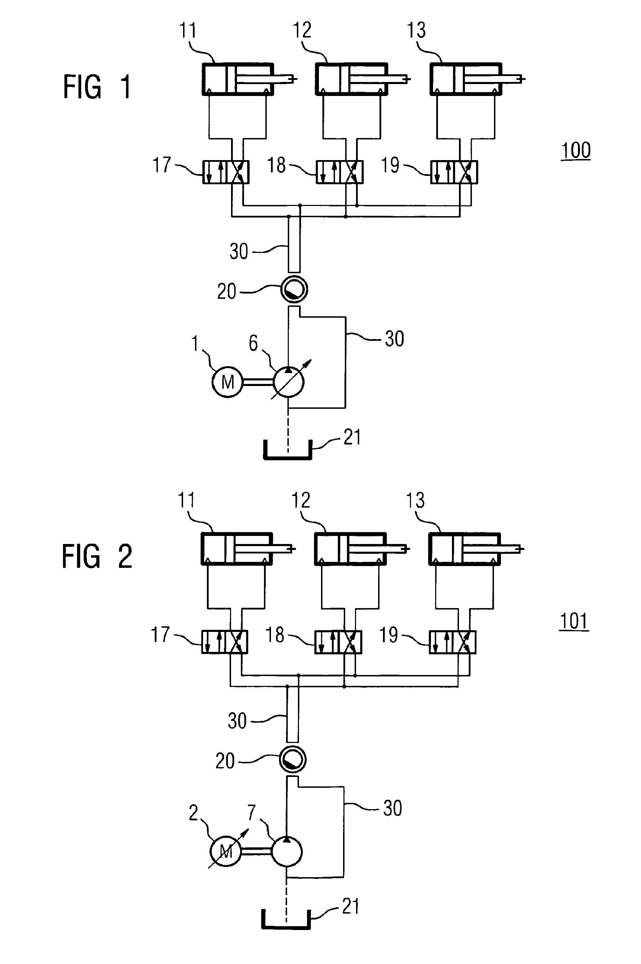

Die Darstellung gemäß FIG 1 zeigt eine Pitchverstelleinrichtung 100, bei welcher eine geregelte Hydraulikpumpe 6 mittels einer nicht geregelten elektrischen Maschine 1 antreibbar ist. Hydraulikflüssigkeit wird über ein Verteilsystem 30 über eine Drehdurchführung 20 zu Ventilen 17, 18 und 19 geführt. Über die Ventile 17, 18 und 19 sind Kolben 11, 12 und 13 ansteuerbar. Kolben und Ventile befinden sich in der Nabe der Windkraftanlage. Elektrische Maschine und Pumpe befinden sich in einer Gondel der Windkraftanlage. Die Kopplung erfolgt über die Drehdurchführung 30. Für die Hydraulikflüssigkeit ist ein Tank 21 vorgesehen.

Die Darstellung gemäß FIG 2 zeigt eine Servopumpe, welche eine regelbare elektrische Maschine 2 und eine Konstantpumpe 7 aufweist. Damit lässt sich im Vergleich zum System nach Figur 1 der Preis senken und die Energieeffizienz erhöhen, weil auf die geregelte Pumpe (vgl. Figur 1) verzichtet werden kann. Die weiteren Merkmale der Pitchverstelleinrichtung 101 sind zu denen in Figur 1 gleichartig.

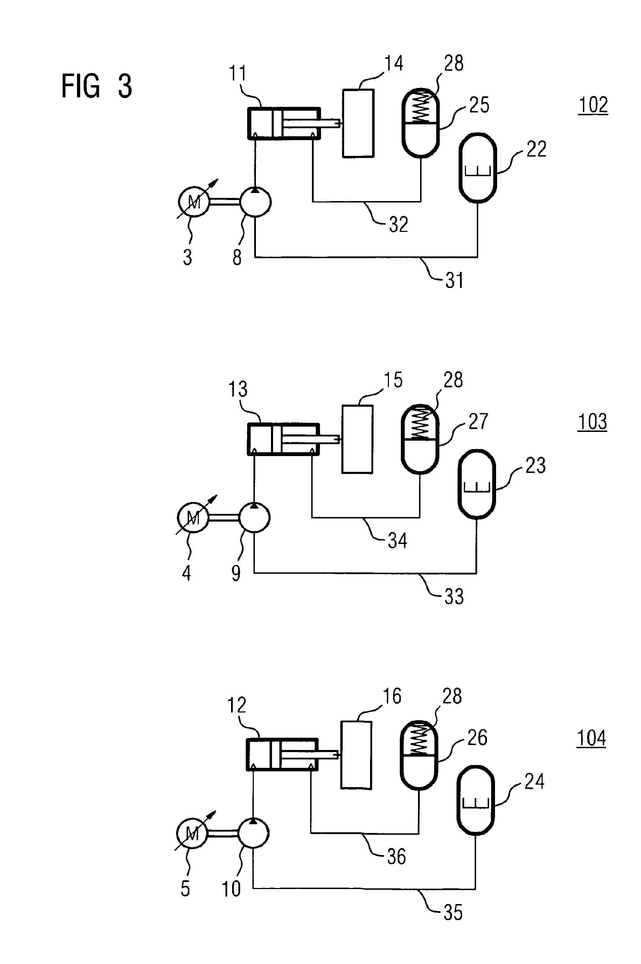

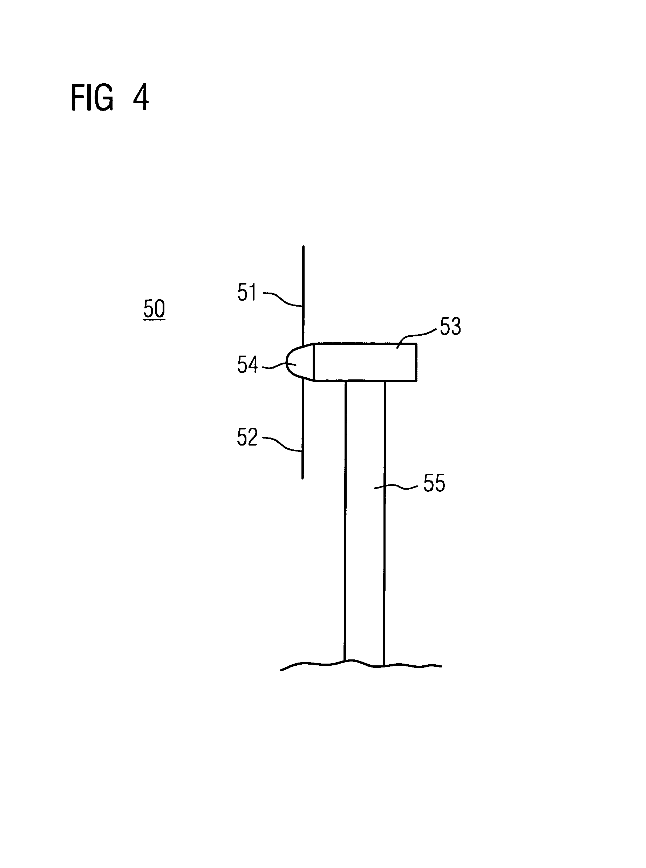

Die Darstellung gemäß FIG 3 zeigt drei Pitchverstelleinrichtungen 102, 103 und 104, wobei jede Pitchverstelleinrichtung jeweils für ein Rotorblatt der Windkraftanlage vorgesehen ist. Die jeweiligen Pitchverstelleinrichtungen 102, 103 und 104 weisen eine regelbare elektrische Maschine 3, 4 und 5 auf, sowie Konstantpumpen 8, 9 und 10. Über eine Hydrauliksystem 31 bis 36 sind die Pumpen mit den jeweiligen Kolben 11 bis 13 verbunden. Die Kolben 11 bis 13 sind mit den Rotorblättern 14 bis 16 gekoppelt (In FIG 4 mit 51, 52 bezeichnet). Druckspeicher 25 bis 27 mit Federn 28 dienen der Energiepufferung und sind mit einem Anschluss der Kolben verbunden. Die Pumpen 8 bis 10 sind jeweils mit geschlossenen Tanks 22 bis 24 für die Hydraulikflüssigkeit verbunden.

Bei dieser Konstruktion wird also auf einer Seite des Linearaktors (Kolben) ein Druckspeicher 25 bis 27 eingesetzt, der beim Ausfahren des Kolbens das auf einer Ringseite verdrängte Hydrauliköl aufnimmt. Soll die Achse sich nun in die andere Richtung bewegen, dient die im Druckspeicher gespeicherte Energie dazu, die Achse wieder zurückzustellen. Das Öl der anderen Kammer fließt durch die Pumpe wieder zurück zum Tank 22 bis 24, der ebenfalls als Druckspeicher (mit niedrigem Druck) ausgeführt werden kann. Somit kann die gesamte Anordnung in die rotierende Nabe verlegt werden, so dass eine komplizierte hydraulische Drehdurchführung für die in der Regel 3 Pitchachsen entfallt und lediglich noch eine elektrische Drehgeberverbindung zur Versorgung der Antriebstechnik notwendig ist, sowie sie auch bei elektrischen Pitchverstellungen verwendet wird. Die Linearachse kann sowohl symmetrisch (mit gleichen Kolbenflachen) oder aber unsymmetrische (mit kleinerer Kolbenflache auf der Ringseite) ausgeführt werden.

Die Darstellung gemäß FIG 4 zeigt die Nabe 54 einer Windkraftanlage 50. Die Nabe 54 mit den Rotorblättern 51 und 52 ist drehbar zur Gondel 53, welche ihrerseits wiederum drehbar auf dem Mast 55 gelagert ist.

## Patentansprüche

1. Pitchverstelleinrichtung (101,102,103,104), welche eine drehzahlveränderbare elektrische Maschine (2,3,4,5), eine Konstantpumpe (7,8,9,10) und einen Kolben (11,12,13) aufweist.

2. Pitchverstelleinrichtung (101,102,103,104) nach Anspruch 1, wobei die elektrische Maschine (2,3,4,5) regelbar ist.

3. Pitchverstelleinrichtung (101,102,103,104) nach Anspruch 1 oder 2, wobei die Konstantpumpe (7,8,9,10) direkt mit dem Kolben gekoppelt ist.

4. Pitchverstelleinrichtung (101,102,103,104) nach einem der Ansprüche 1 bis 3, wobei einem Kolben (11) jeweils eine Konstantpumpe (8) zugeordnet ist.

5. Pitchverstelleinrichtung (101,102,103,104) nach einem der Ansprüche 1 bis 4, wobei einem Kolben (11) jeweils eine elektrische Maschine (3) zugeordnet ist.

6. Pitchverstelleinrichtung (101,102,103,104) nach einem der Ansprüche 1 bis 5, welche einen Druckspeicher (25,26,27) aufweist.

7. Pitchverstelleinrichtung (101,102,103,104) nach einem der Ansprüche 1 bis 6, wobei der Kolben (11,12,13) an zwei Speicher (22,23,24,25,26,27) angeschlossen ist.

8. Nabe (54) einer Windkraftanlage (50), welche eine Pitchverstelleinrichtung (101,102,103,104) nach einem der Ansprüche 1 bis 7 aufweist.
